**Europäisches Patentamt**

**European Patent Office**

**Office européen des brevets**

(19)

(11) Numéro de publication: **0 184 050**
**B1**

(12)

# FASCICULE DE BREVET EUROPEEN

(45) Date de publication du fascicule du brevet:
18.10.89

(51) Int. Cl.⁴: **G 02 B 6/44**

(21) Numéro de dépôt: **85114498.0**

(22) Date de dépôt: **14.11.85**

(54) Dipositif de raccordement d'un câble à fibres optiques à un boîtier de jonction, et procédé de fabrication de ce dispositif.

(30) Priorité: **16.11.84 FR 8417532**

(43) Date de publication de la demande:
**11.06.86 Bulletin 86/24**

(45) Mention de la délivrance du brevet:
**18.10.89 Bulletin 89/42**

(84) Etats contractants désignés:
**BE CH DE FR GB IT LI NL SE**

(56) Documents cités:
**EP-A- 0 066 829**
**EP-A- 0 083 101**
**EP-A- 0 091 632**

(73) Titulaire: **LES CABLES DE LYON Société anonyme dite:,**
**170 quai de Clichy, F-92111 Clichy Cedex (FR)**

(72) Inventeur: **Bonicel, Jean-Pierre, 14 rue des Tournelles,**
**F-69005 Lyon (FR)**
Inventeur: **Couvrie, Gérard, 143 avenue B. Buyer,**
**F-69005 Lyon (FR)**

(74) Mandataire: **Weinmiller, Jürgen et al,**
**Lennéstrasse 9 Postfach 24, D-8133 Feldafing (DE)**

## Description

La présente invention concerne un dispositif de raccordement à un boîtier de jonction d'un câble à fibres optiques et à élément porteur axial en matériau composite comprenant des fibres, ou en tresse de fibres, notamment pour câbles de garde pour lignes à haute tension.

Elle s'étend en outre à un procédé de fabrication de ce dispositif.

On a déjà proposé dans la demande de brevet FR-A-2 524 986 de la Demanderesse un dispositif de jonction des extrémités de deux câbles sous-marins à fibres optiques, possédant chacun un cœur optique, une voûte en fils d'acier, un tube de cuivre rétreint sur la voûte, une gaine isolante, un conducteur de retour et une gaine de protection, comprenant à l'extrémité de chaque câble une pièce d'ancrage, une bague d'épanouissement des fils d'acier et un remplissage en résine durcissable dans lequel sont collées les extrémités des fils d'acier, bloquées entre les pièces d'ancrage et les bagues d'épanouissement.

Un tel dispositif est cependant relativement complexe et ne convient pas bien pour le raccordement d'un câble à élément porteur axial non métallique, notamment de câbles de garde à structure tubulaire ou à jonc central muni de rainures de logement des fibres optiques, avec un élément porteur axial en matériau composite (fibres de verre-résine époxy, fibres de verre-résine polyester, fibres de polyamide aromatique-résine polyester) ou en tresse de fibres non métalliques à résistance élevée (fibres de carbone). L'extrémité de tels câbles doit en effet être parfaitement bloquée dans le boîtier de raccordement et pouvoir supporter des efforts correspondant à un allongement d'au moins 0,8% sans subir de rupture ou de glissement.

La présente invention a pour but de procurer un dispositif de raccordement qui assure un excellent blocage de l'extrémité du câble dans le boîtier, et permette à cette extrémité de supporter des efforts correspondant à un allongement d'au moins 0,8% sans rupture ni glissement, tout en étant d'une structure simple et facile à mettre en œuvre.

Le dispositif selon l'invention est caractérisé en ce qu'à l'extrémité de l'élément porteur axial les fibres du matériau composite ou de la tresse de cet élément sont épanouies en une houppe et immobilisées dans une résine polymérisée à froid remplissant une cavité solidaire du boîtier.

Dans le cas d'un câble à élément porteur en matériau composite comportant des fibres le procédé de l'invention caractérisé en ce que l'on brûle l'extrémité de l'élément porteur axial de façon à en dégager les fibres du matériau composite et à les faire diverger en une houppe, puis en ce que l'on noie la houppe de ces fibres de verre dans une résine polymérisable à froid remplissant une cavité solidaire du boîtier, et en ce que l'on laisse polymériser la résine.

Dans le cas d'un câble à élément porteur axial en tresse de fibres, le procédé de l'invention est caractérisé en ce que l'on écarte les fibres à l'extrémité de la tresse de façon à former une houppe, puis en ce que l'on noie la houppe de fibres dans une résine polymérisable à froid remplissant une cavité solidaire du boîtier, et en ce que l'on laisse polymériser la résine.

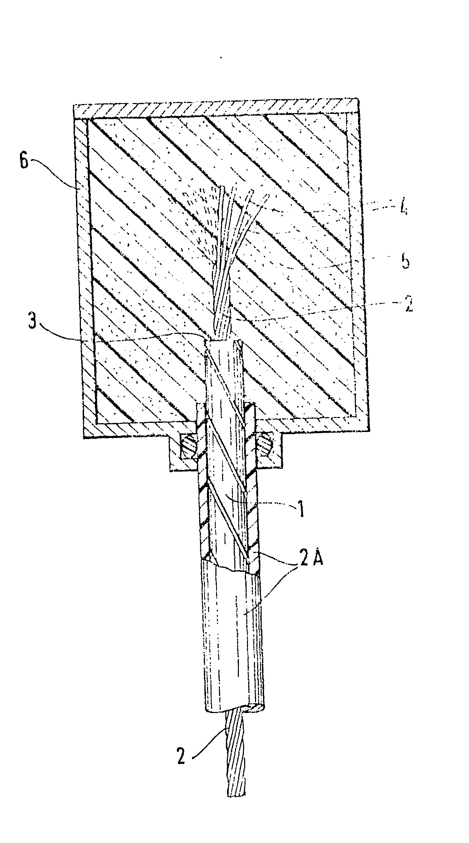

Il est décrit ci-après, à titre d'exemple et en référence à la figure unique du dessin, un dispositif de raccordement d'un câble de garde pour ligne à haute tension, à jonc central rainuré en matière plastique et élément porteur composite en fibres de verre et résine époxy, à un boîtier de jonction.

Le jonc central 1 à élément porteur axial 2, de diamètre de l'ordre de 0,5 mm à 2 mm (formé de fibres de verre de diamètre d'environ 20 microns, tordues ensemble et enrobés de résine époxy, dans un rapport pondéral verre/verre + résine de 70%), et gaine 2A, se termine en un point 3. L'élément porteur s'étend au delà sur une longueur de 50 mm. Puis les fibres de verre s'épanouissent en une houppe 4 sur une longueur de 25 à 30 mm. Cette houppe est noyée dans une masse de résine époxy 5 disposée dans une cavité 6 solidaire du boîtier de jonction, non représenté. En ce qui concerne les fibres optiques du câble, non représentées, elles sont raccordées aux fibres provenant de l'extrémité d'un autre câble, dans une cavité disposée dans le boîtier, de manière connue, assurant une surlongueur de raccordement, par exemple grâce à la structure décrite dans la demande de brevet FR-A-2 524 986 ou la demande de brevet correspondante aux USA n° 482 358 du 5 avril 1983.

Le dégagement des fibres de verre du matériau composite de l'élément porteur du jonc et leur épanouissement sont assurés par brûlage de l'extrémité du jonc. Celui-ci assure en outre l'élimination de l'ensimage que les fibres de verre pourraient encore comporter, et facilite ainsi leur imprégnation par une résine polymérisable à froid, telle qu'une résine époxy.

On a effectué un essai de résistance à la rupture et au glissement sur un jonc en matière plastique à élément porteur axial en composite fibres de verre-résine disposé verticalement et bloqué à chaque extrémité par épanouissement des fibres de verre dans une masse de résine époxy polymérisée à froid disposée dans un boîtier. Le boîtier inférieur était soumis à un effort de traction imprimant au jonc un allongement de 1%. Il n'a été constaté aucune rupture ni aucun glissement à l'issue d'une période d'observation de 8 mois.

On a par ailleurs effectué des essais de résistance à la traction sur l'élément porteur en immobilisant d'un côté le boîtier d'ancrage. On a obtenu la rupture de l'élément porteur pour un allongement de 5% environ, ce qui montre que la résistance à la traction de l'ensemble du boîtier d'ancrage et de l'élément porteur est égale à celle de l'élément porteur seul. Cette résistance correspond à une force de 400 kg pour rompre un jonc de 2 mm de diamètre et de 285 kg pour rompre un jonc de 1,2 mm de diamètre.

## Revendications

1. Dispositif de raccordement à un boîtier de jonction d'un câble à fibres optiques et à élément porteur axial (2) en matériau composite comprenant des fibres, ou en tresse de fibres, caractérisé en ce qu'à l'extrémité de l'élément porteur axial les fibres du matériau composite ou de la tresse de cet élément sont épanouies en une houppe (4) et immobilisées dans une résine polymérisée à froid (5) remplissant une cavité (6) solidaire du boîtier.

2. Procédé de fabrication du dispositif selon la revendication 1, pour câble à élément porteur axial en matériau composite comportant des fibres de verre, caractérisé en ce que l'on brûle l'extrémité de l'élément porteur axial de façon à en dégager les fibres du matériau composite et à les faire diverger en une houppe, puis en ce que l'on noie la houppe de ces fibres de verre dans une résine polymérisable à froid remplissant une cavité solidaire du boîtier, et en ce que l'on laisse polymériser la résine.

3. Procédé de fabrication de dispositif selon la revendication 1, pour câble à élément porteur axial en tresse de fibres, caractérisé en ce que l'on écarte les fibres à l'extrémité de la tresse de façon à former une houppe, puis en ce que l'on noie la houppe de fibres dans une résine polymérisable à froid remplissant une cavité solidaire du boîtier, et en ce que l'on laisse polymériser la résine.

**Patentansprüche**

1. Vorrichtung zum Anschluss eines Kabels mit Lichtleitfasern und mit axialem Trägerelement (2), bestehend aus einem zusammengesetzten Material mit Fasern oder einem Faserzopf, an ein Anschlussgehäuse, dadurch gekennzeichnet, dass die Fasern des zusammengesetzten Materials oder die Fasern des Zopfes des axialen Trägerelements am Ende dieses Elements zu einem Büschel (4) aufgefächert und in einem kaltpolymerisierten Harz (5) fest verankert sind, welches einen mit dem Gehäuse fest verbundenen Hohlraum (6) füllt.

2. Verfahren zur Herstellung der Vorrichtung nach Anspruch 1, für ein Kabel mit axialem Trägerelement aus einem zusammengesetzten Material mit Glasfasern, dadurch gekennzeichnet, dass das Ende des axialen Trägerelements in der Weise versengt wird, dass die Fasern des zusammengesetzten Materials freigelegt und zu einem Büschel aufgefächert werden, dass dann das Büschel dieser Glasfasern in ein kaltpolymerisierbares Harz getaucht wird, welches einen fest mit dem Gehäuse verbundenen Hohlraum füllt, und dass man das Harz polymerisieren lässt.

3. Verfahren zur Herstellung der Vorrichtung nach Anspruch 1, für ein Kabel mit axialem Trägerelement in Form eines Faserzopfes, dadurch gekennzeichnet, dass die Fasern am Ende des Zopfes unter Bildung eines Büschels auf Abstand gebracht werden, dass das Faserbüschel in ein kaltpolymerisierbares Harz getaucht wird, welches einen fest mit dem Gehäuse verbundenen Hohlraum füllt, und dass man das Harz polymerisieren lässt.

**Claims**

1. A device for joining an optical fibre cable presenting an axial supporting member made of composite material including fibres or a braid of fibres to a junction box, characterized in that the fibres of the composite material or of the braid are flared out at the end of the axial supporting member into a tuft (4) and are secured in a cold-polymerized resin (5) which fills a cavity (6) integral with said box.

2. A method for the manufacture of the device according to claim 1, for a cable having an axial supporting member of composite material including glass fibres, characterized in that the end of the axial supporting member is burned so as to free the fibres from the composite material and to cause them to flare out into a tuft, that the tuft of the glass fibres is then immersed in a cold-polymerizable resin which fills a cavity integral with the box, and that the resin is allowed to polymerize.

3. A method for the manufacture of the device according to claim 1, for a cable having an axial supporting member made of a fibre braid, characterized in that the fibres are flared out at the end of the braid, so as to form a tuft, that the tuft of fibres is then immersed in a cold-polymerizable resin which fills a cavity integral with the box, and that the resin is allowed to polymerize.

1/1